# EUROPÄISCHE PATENTSCHRIFT

(11) **EP 0 610 815 B1**
(45) Veröffentlichungstag und Bekanntmachung des Hinweises auf die Patenterteilung: **22.12.1999**
(21) Anmeldenummer: 94101639.6
(22) Anmeldetag: 03.02.1994
(51) Int. Cl.: C08J 5/18, C08L 45/00

(54) **Folie aus Cycloolefincopolymeren**
Cyclo-olefin copolymer sheet
Film copolymère de cyclo-olefine

(30) Priorität: 12.02.1993 DE 4304309
(43) Veröffentlichungstag der Anmeldung: 17.08.1994
(73) Patentinhaber: Ticona GmbH, 65451 Kelsterbach (DE)
(72) Erfinder: Bennett, Cynthia, D-55232 Alzey (DE); Brekner, Michael-Joachim, D-60529 Frankfurt (DE); Hermmann-Schönherr, Otto, D-64625 Bensheim (DE); Osan, Frank, D-65779 Kelkheim (DE)

(56) Entgegenhaltungen:
- EP-A- 0 485 893
- EP-A- 0 501 370
- EP-A- 0 530 767

## Beschreibung

Die Erfindung betrifft biegsame Folien aus Cycloolefincopolymeren, ein Verfahren zur Herstellung solcher Folien sowie deren Verwendung.

Cycloolefincopolymere weisen folgende, speziell für Folien vorteilhafte Eigenschaften auf:
- hohe Transparenz (für optische Anwendungen)
- gute dielektrische Eigenschaften (als Kondensatordielektrikum)
- hohe Erweichungstemperaturen, insbesondere bei hohem Cycloolefingehalt (für Hochtemperaturanwendungen) und
- gute Gasbarriere (für Anwendungen auf dem Verpackungssektor).

Folien aus Cycloolefincopolymeren sind bekannt. Die DD-A 224 538 und DD-A 241 971 beschreiben Gießfolien aus Ethylen-Norbornen-Copolymeren.

Die EP-A 0 384 694 beschreibt ebenfalls Folien aus zyklischen Copolymeren. Außer den Norbornen-Copolymeren sind die dort erwähnten anderen cycloolefinischen Ausgangsmaterialien jedoch vergleichsweise teuer und damit unwirtschaftlich.

Ein gravierender Nachteil bei allen bisher bekannten Folien aus Cycloolefincopolymeren ist die hohe Sprödigkeit, die für die Handhabung von Folien problematisch ist, da solche Folien beim Auf- und Abwickeln leicht brechen. Dies macht sich insbesondere bei den außerordentlich dünnen Folien für Kondensatordielektrika bemerkbar, wo die Kapazität des Kondensators invers proportional zum Quadrat der Foliendicke ist. Solche äußerst dünnen Folien aus üblichen Cycloolefincopolymeren sind nicht mehr handhabbar.

Es bestand also das Bedürfnis fort, zu biegsamen Cycloolefincopolymer-Folien zu gelangen, die sich als Folie besser handhaben lassen und z.B. für die Verwendung als Kondensatordielektrikum geeignet sind. Ebenfalls bestand nach wie vor ein Bedürfnis nach Cycloolefincopolymer-Folien für weniger spröde Tiefziehteile, z.B. für die Herstellung von heißbefüllbaren Verpackungen oder geformten Elektroisolierungen.

Es wurde nun gefunden, daß Cycloolefincopolymere mit einer speziellen Mikrostruktur die Herstellung von orientierten Cycloolefincopolymerfolien mit besonders guter Biegsamkeit erlauben. Diese Mikrostruktur ist nach Kernresonanzuntersuchung taktisch bezüglich der Mikrostruktur der Blöcke in der Polymerkette. Die Art der Taktizität ist nicht bekannt. Die spezielle Mikrostruktur ist charakterisiert durch eine relativ hohe Isotaktizität bezüglich der Cycloolefine. Dies führt zu einer höheren Verschlaufungsdichte und erlaubt eine mechanische Relaxation, was sich makroskopisch in einer Herabsetzung der Sprödigkeit (= höhere Duktilität) bemerkbar macht. Mechanische Energie kann sich über größere Volumina verteilen; das Material reißt nicht so schnell.

Einige der zur Herstellung der erfindungsgemäßen Folien geeigneten Cycloolefincopolymere sind bereits in der EP-A 0 407 870, der EP-A-0 503 422 und in der DE-A 40 36 264 beschrieben. In diesen Schriften wird auch erwähnt, daß aus diesen Rohstoffen Folien hergestellt werden können. Jedoch umfassen diese Schriften auch solche Cycloolefincopolymere, die sich zur Herstellung erfindungsgemäßer Folien nicht eignen, da sie zu spröde sind und somit keine ausreichende Biegsamkeit aufweisen. Geeignete Maßnahmen zur Herstellung von Cycloolefincopolymeren mit der speziellen Mikrostruktur sind in diesen Schriften nicht beschrieben.

Unter ausreichender Biegsamkeit wird im Folgenden verstanden, daß die Folie einer Biegebeanspruchung, insbesondere wiederholten Biegebeanspruchungen, ohne Bruch standhält. Erfindungsgemäße Folien mit Dicken von ca. 100 µm halten mindestens 50maligem, vorzugsweise mindestens 100- bis 200maligem, Biegen stand.

Diese im Hinblick auf Folien gemäß Stand der Technik verbesserte Biegsamkeit ist bedingt durch eine verbesserte Duktilität des Cycloolefincopolymeren und somit der Folie. Cycloolefincopolymere eignen sich nur dann zur Herstellung von erfindungsgemäßen Folien, wenn diese Polymere eine Nebenerweichung unterhalb der Glastemperatur (T_{g}) aufweisen, so daß das mechanische tan δ der Folie bei 50 °C unterhalb der Glastemperatur mindestens 0,015 ist. Dieser tan δ-Wert dient als ein möglicher Nachweis der erfindungsgemäß erforderlichen Mikrostruktur der Polymeren.

Ein weiterer Nachweis dieser Mikrostruktur ist das ¹³C-NMR-Spektrum. Das ¹³C-NMR-Spektrum des Cycloolefincopolymeren, das mindestens eine Schicht der erfindungsgemäßen Folie ausmacht, weist neben anderen Unterschieden einen charakteristischen Peak bei 42,2 ppm auf.

Die erfindungsgemäßen Folien enthalten mindestens eine Schicht, die überwiegend, d.h. zu mindestens 90 Gew.-%, bevorzugt mindestens 95 Gew.-% (bezogen auf das Gewicht dieser Schicht) aus einem Cycloolefincopolymeren aufgebaut ist, bestehend aus den Wiederholungseinheiten (I) und (II) 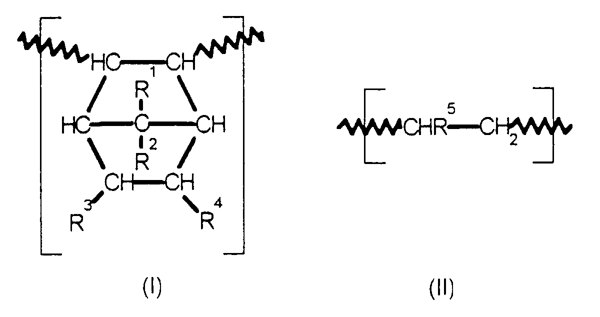 und gegebenenfalls (III) und/oder (IV) und/oder (V) 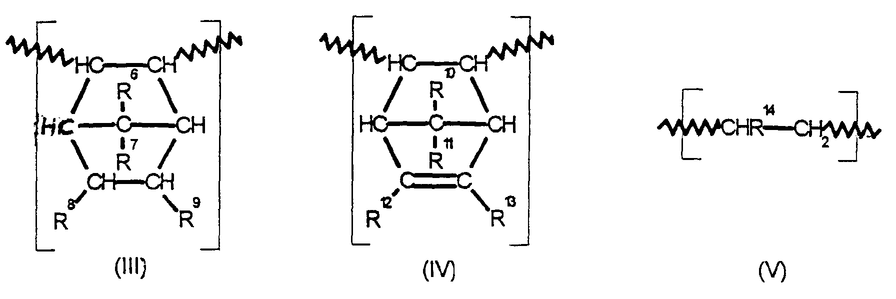 wobei (III) ungleich (I) ist,
- R¹ bis R⁵: gleich oder verschieden sind und H, Aryl, C₁ - C₁₀- Alkyl, C₃ - C₁₀-Cycloalkyl bedeuten und wobei
- R⁶ bis R¹⁴: gleich oder verschieden sind und die Bedeutung von R¹ bis R⁵ haben oder C₂-C₁₀-Alkylen oder C₃-C₁₀-Cycloalkenyl bedeuten und wobei die Restepaare R⁶/R⁷, R⁸/R⁹, R¹⁰/R¹¹ und/oder R¹²/R¹³ jeweils untereinander verbunden sind und zusammen mit den C-Atomen an denen sie gebunden sind einen C₄- C₁₀-Cycloalkyl- oder C₄ - C₁₀- Cycloalkenylrest darstellen, der seinerseits durch einen -C(R¹,R²)-Rest überbrückt sein kann, wobei R¹ und R² die oben für R¹ bis R⁵ angegebenen Bedeutungen haben.
R¹, R²,R³, R⁴ und R⁵ sind vorzugsweise H.

In einer bevorzugten Ausführung der Erfindung werden Monomere verwendet, die mindestens zwei Doppelbindungen enthalten, d.h. mindestens einer der Reste R⁶ bis R¹⁴ ist ungesättigt. Durch geeigneter Wahl der Polymerisationsbedingungen (z.B. ausreichend lange Reaktionszeit zur Erzielung eines hohen Umsatzes) kann eine Langkettenverzweigung - durch den Einbau einer Seitenkette über die zweite Doppelbindung des Dienmonomers - bewirkt werden. Solche Polymere sind für die Herstellung von Blasfolien geeignet. Werden andererseits die Polymerisationsbedingungen so gewählt, daß unreagierte Doppelbindungen im Polymeren verbleiben, d.h., daß einer oder mehrere der Reste R⁶ bis R¹⁴ ungesättigt sind, können diese Doppelbindundungen zu nachträglichen Verzweigungen oder zur Vernetzung genutzt werden, z.B. zur Fixierung der Dimension der Folie oder des Tiefziehteils oder auch zur chemischen Modifizierung.

Der Gehalt an Wiederholungseinheiten der Formel (I) in dem Cycloolefincopolymeren beträgt 5-95 Mol-%, bevorzugt 20-70 Mol-%. Der Gehalt an Wiederholungseinheiten der Formel (II) in dem Cycloolefincopolymeren beträgt 95 - 5 Mol-%, bevorzugt 30 - 80 Mol-%. Die Wiederholungseinheit der Formel (III) ist nicht zwingend vorhanden und ist deshalb in dem Polymeren in einer Menge von 0-5 Mol-%, bevorzugt 0 - 3 Mol-% enthalten. Die Wiederholungseinheit der Formel (IV) ist ebenfalls nicht zwingend vorhanden und ist deshalb in dem Polymeren in einer Menge von 0-5 Mol-%, bevorzugt 0-3 Mol-% enthalten. Die Wiederholungseinheit der Formel (V) ist ebenfalls nicht zwingend vorhanden und ist folglich in dem Polymeren in einer Menge von 0-5 Mol-%, bevorzugt 0-3 Mol-% enthalten. Alle obengenannten Mol-%-Angaben beziehen sich auf das Gewicht des eingesetzten Cycloolefincopolymeren. Die Summe aller Mol-%-Anteile der Wiederholungseinheiten (I), (II), (III), (IV) und (V) beträgt 100 Mol-%.

Die molaren Anteile der Strukturen (I), (II), (III), (IV) und (V) beeinflussen die Glastemperatur (T_{g}) der erhaltenen Cycloolefincopolymere. Bei Copolymeren, welche ausschließlich aus den Wiederholungseinheiten der Formeln (I) und (II) bestehen, wobei (II) Ethylen ist, führt ein Molanteil von 25 Gew.-% an (I) zu einem T_{g} von ca. 50°C; ein Molanteil von 65 Gew.-% an (I) führt zu einem T_{g} von ca. 200°C. Andere Monomerzusammensetzungen verhalten sich ähnlich, d.h. höhere Molanteile an Wiederholungseinheiten der Formel (I) führen zu höheren Glastemperaturen.

Für die erfindungsgemäßen biegsame Folien werden Glastemperaturen von 50°-250° C, insbesondere 80°-200° C bevorzugt.

Zur Herstellung des Polymeren können einige ausgewählte verbrückte Metallocen-Katalysatorsysteme verwendet werden, wie sie in DE-A 40 36 264 und EP-A 0 407 870 beschrieben sind. Die Wahl des Katalysators und der Polymerisationsbedingungen sind kritisch für die Erzielung der erfindungsgemäßen Mikrostruktur. Methylaluminoxan /*rac*-Dimethylsilyl-bis-(1-indenyl)-zirkondichlorid- oder Methylaluminoxan / Isopropylen-(cyclopentadienyl)-(1-indenyl)-zirkondichlorid-Systeme haben sich als geeignet erwiesen. Jedoch sind auch andere Katalystoren für die Herstellung der Polymeren geeignet, solange die erfindungsgemäße Mikrostruktur erhalten wird. Ein Beispiel für einen Katalysator, der nicht zu der erwünschten Mikrostruktur führt, ist Diphenylmethylen-(cyclopentadienyl)-(9-fluorenyl)-zirkondichlorid. Die Herstellung der Cycloolefincopolymere geschieht zweckmäßigerweise nach dem in der DE-A 40 36 264 beschriebenen Verfahren. Hierbei geht man am besten so vor, daß man das Cycloolefin und das Olefin in einem Polymerisationsreaktor vorlegt und mit dem gelösten oder suspendierten Katalysatorsystem versetzt und auf Reaktionstemperatur bringt. Durch geeignete Wahl der Reaktionstemperatur kann das Einbauverhältnis der Monomeren in das Polymere und somit die Glastemperatur des Polymeren gesteuert werden. Zur Erzielung einer gleichmäßigen Einbaurate wird zweckmäßigerweise der Druck des meist gasförmigen Olefins während der Polymerisation konstant gehalten. Nach Beendigung der Reaktion wird der Katalysator beispielsweise durch Zugabe eines Alkohols desaktiviert und vom Polymeren abgetrennt.

Der Nachweis der erfindungsgemäßen Mikrostruktur kann entweder über den Temperaturverlauf des mechanischen tanδ oder mittels ¹³C-NMR-Spektrum erfolgen. Der Temperaturverlauf des mechanischen tan δ (auch mechanischer Verlustfaktor genannt) gibt Auskunft über mechanische Relaxationsprozesse, also Haupterweichungen (Glasübergänge) und Nebenerweichungen. Das mechanische tan δ kann mit einer Reihe von Schwingungsmethoden bestimmt werden, z.B. Torsionspendel- oder Wechsellastuntersuchungen (vgl. Ch. Fritzsche, "Torsionsschwingungsmessungen an Kunststoffen" in Kunststoffe--Plastics, Band 21, Heft Nr. 2, (1974) Seiten 17-24). Die Messung des dielektrischen Verlustfaktors ist bei Polyolefinen für die Erfassung mechanischer Relaxationen weniger aufschlußreich, da sie zu wenig polar sind. Die Schwingungsuntersuchung muß an nicht-orientierten Proben durchgeführt werden. Wenn die Proben orientiert sind, müssen sie vor der Untersuchung isotropisiert werden, d.h. ihre Orientierung muß aufgehoben werden. Diese Isotropisierung kann beispielsweise durch Tempern während mindestens 30 Minuten bei einer Temperatur ca. 20°C oberhalb des T_{g}'s erfolgen. Alternativ zum Tempern von Folienproben können aus dem Polymeren auch nicht orientierte Spritzgußstäbe hergestellt werden, die als Meßproben dienen. Falls eine Folienprobe andere Schichten oder Zuschlagstoffe in Mengen > 2 Gew.-% enthält, sollten anstelle des mechanischen tan δ die ¹³C-NMR-Spektren gemessen werden.

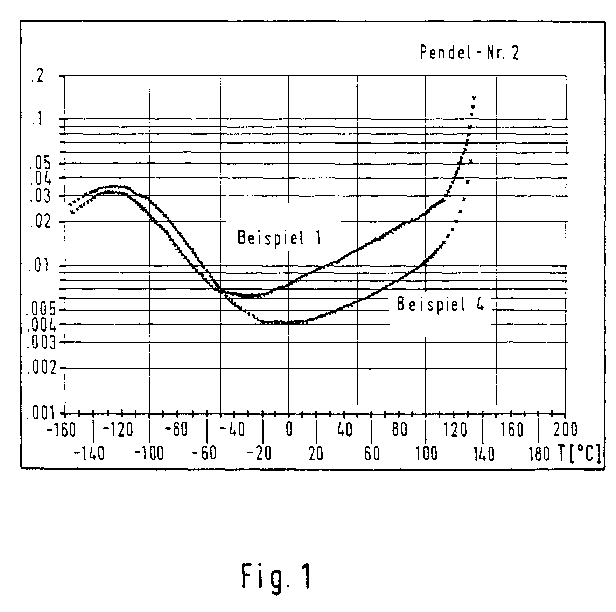

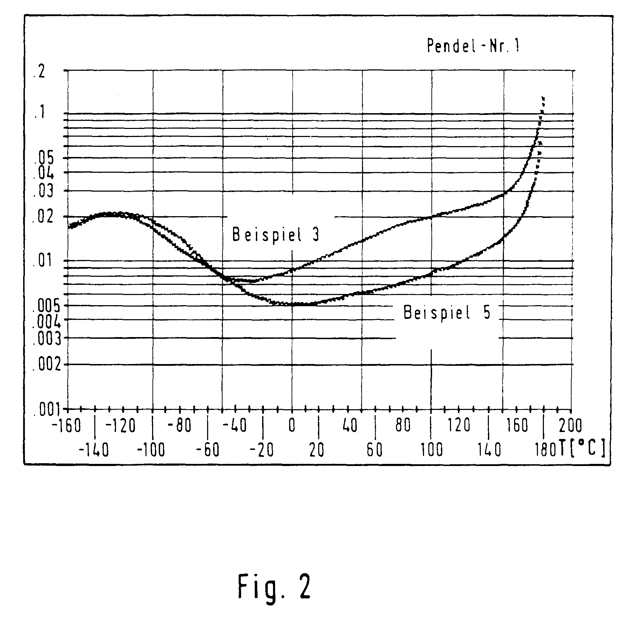

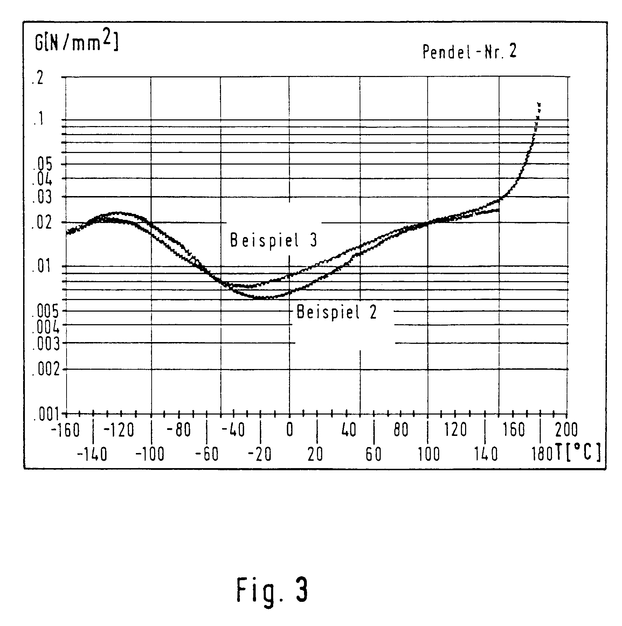

Der Temperaturverlauf des mechanischen tan δ von Polymeren mit und ohne erfindungswesentlicher spezieller Mikrostruktur ist in den Abb. 1, 2 und 3 dargestellt. Die Polymere mit der speziellen Mikrostruktur weisen höhere Werte im Bereich zwischen der Glastemperatur bis unter 0 °C auf, d.h. die Proben mit der speziellen Mikrostruktur haben in diesem Temperaturbereich eine verbesserte Duktilität. Charakteristisch für die Polymere mit der erfindungswesentlichen speziellen Mikrostruktur ist, daß das mechanische tan δ Werte > 0,015, bevorzugt > 0,018 bei einer Temperatur 50 ° C unterhalb der Glastemperatur aufweist. Werte von > 0,1 sind nicht mehr realistisch.

Aufgrund der erhöhten Duktilität weisen die erfindungsgemäßen Folien erhöhte Biegsamkeit und/oder Reißdehnung auf. Es ist zwar bekannt, daß die Biegsamkeit und Reißdehnung von Folien auch durch Orientierung erhöht werden kann. Eine orientierte, nicht-erfindungsgemäße Folie kann dementsprechend eine höhere Biegsamkeit und/oder Reißdehnung als eine weniger orientierte, erfindungsgemäße Folie aufweisen. Wenn jedoch Folien mit gleicher Dicke, gleichem Orientierungsgrad, gleicher molare Zusammensetzung und gleichem T_{g} miteinander verglichen werden, wird die erfindungsgemäße Folie stets eine höhere Biegsamkeit und Reißdehnung aufweisen als eine nichterfindungsgemäße Cycloolefincopolymer-Folie.

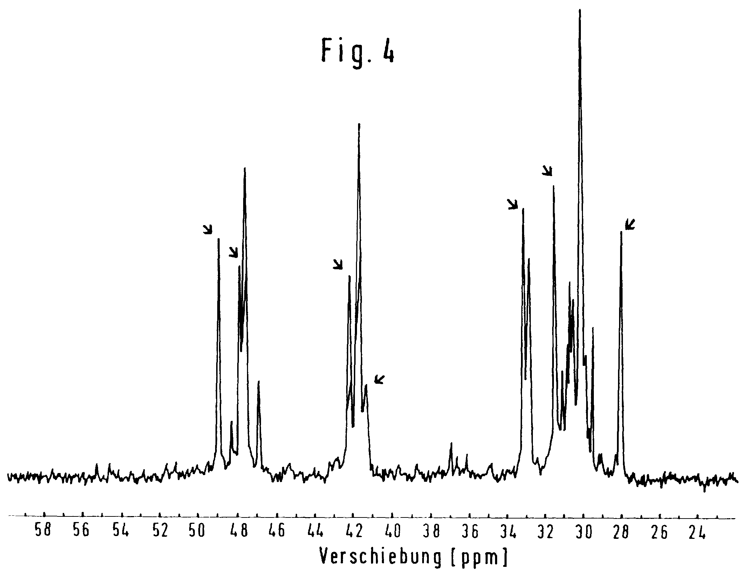

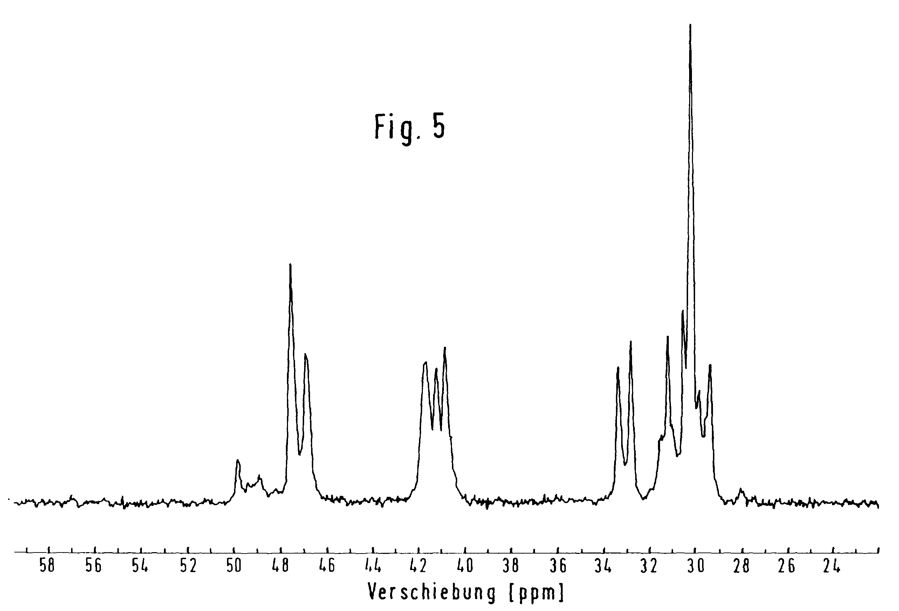

Dieerfindungsgemäße Mikrostruktur verursacht einige charakteristische Peaks im ¹³C-NMR-Spektrum. Die Abbildung 4 zeigt ein typisches Spektrum von Cycloolefincopolymeren aus Norbornen und Ethylen mit der erfindungsgemäßen Mikrostruktur; Abb. 5 zeigt im Vergleich ein Spektrum eines Cycloolefincopolymeren ohne die erfindungsgemäße Mikrostruktur. Die Spektren weisen einige gemeinsame Peaks und Unterschiede auf, wobei die Unterschiede wahrscheinlich auf einen unterschiedlichen sterischen Aufbau der Polymeren ("Taktizität") zurückgeführt werden können. Die spezielle Mikrostruktur ergibt einige charakteristische Peaks:

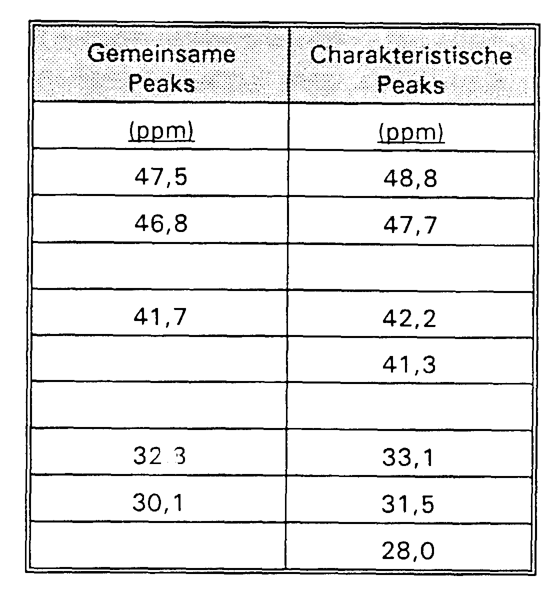

Da die Lage der einzelnen Peaks etwas in Abhängigkeit der Aufnahmebedingungen der Spektren variieren kann, können die in allen Spektren gemeinsamen Peaks als Referenzpunkte dienen. Die Höhen der jeweiligen Peaks variieren je nach Monomerzusammensetzung, jedoch sind die Lagen charakteristisch. Eindeutig für die erfindungsgemäße Mikrostruktur sind die Peaks bei 28,0, 31,5, 33,1, 41,3, 42,2, 47,7 und 48,8 ppm. (Die genannten Peaks sind charakteristisch für die spezielle Mikrostruktur, jedoch enthalten die Spektren in der Regel auch andere Peaks). Zusatzstoffe oder Verunreinigungen können zu zusätzlichen Peaks in einem Spektrum führen. Daher können Spektren der erfindungsgemäß einzusetzenden Polymeren auch zusätzliche Peaks enthalten.

Der Vorteil der vorliegende Erfindung ist, daß die oben erwähnte Mikrostruktur bei einem gegebenen Orientierungsgrad biegsameren Folien ergibt als entsprechende Folien aus Cycloolefincopolymeren mit einer anderen Mikrostruktur oder keiner Mikrostruktur.

In einer bevorzugten Ausführung enthält die Folie feine inerte Partikel, die das Schlupf- und Wickelverhalten verbessern. Solche Partikel, die in Mengen von 0-2 % enthalten sein können sind beispielsweise:
SiO₂, Al₂O₃, Silikate mit einem SiO₂-Anteil von mindestens 30 Gew.-%, amorphe und kristalline Tonminerale, Alumosilikate, Oxide von Mg, Zn, Zr und Ti, Sulfate von Ca, Mg und Ba, Phosphate von Li, Na und Ca (inclusive der Monohydrogensalze und Dihydrogensalze), Benzoate von Li, Na und K, Terephthalate von Ca,Ba, Zn und Mn, Titanate von Mg, Ca, Ba, Zn, Cd, Pb, Sr, Mn, Fe, Co und Ni, Chromate von Ba und Pb, Kohlenstoff (z.B. Ruß oder Graphit), Glas (Glaspulver und Glaskugeln), Carbonate von Ca und Mg, Flußspat, Sulfide von Zn und Mo, organische Polymersubstanzen wie Polytetrafluorethylenpolyethylen, Talkum, Lithiumfluorid, und die Ca-, Ba-, Zn- und Mn-Salze von organischen Säuren.

Die Folie kann auch geeignete Additive wie z.B. Stabilisatoren, Gleitmittel oder Antioxidantien enthalten. Prinzipiell sind Additive, die für Polyolefine wie Polyethylen oder Polypropylen verwendet werden, auch für die Cycloolefincopolymerfolien geeignet. Als UV-Stabilisatoren können beispielsweise Absorber wie Hydroxyphenylbenzotriazole, Hydroxybenzophenone, Formamidin oder Benzyliden-Campher, Quencher wie Zimtsäureester oder Nickel-Chelate, Radikalfänger wie sterisch gehinderte Phenole, Hydroperoxidzersetzer wie Nickel- oder Zink-Komplexe schwefelhaltiger Verbindungen oder Lichtstabilisatoren vom HALS-Typ, sowie deren Gemische eingesetzt werden. Als Gleitmittel können beispielsweise verwendet werden: Fettsäuren sowie deren Ester, Amide und Salze, Silikone oder Wachse wie PP- oder PE-Wachse. Als Antioxidantien können beispielsweise zugesetzt werden Radikalfänger wie substituierte Phenole und aromatische Amine und/oder Peroxidzersetzer wie Phosphite, Phosphonate und Thioverbindungen.

Die erfindungsgemäße Folie kann ein- oder mehrschichtig sein. Mindestens eine Schicht besteht überwiegend, d.h. zu mindestens 85 Gew.-%, bevorzugt zu 90-100 Gew.-%, aus den oben beschriebenen Cycloolefincopolymeren. Eine bevorzugte Ausführung ist die Monofolie.

In einer anderen bevorzugten Ausführung trägt die erfindungsgemäße Hauptschicht eine oder zwei dünne Polymerdeckschichten mit niedrigeren Glastemperaturen als die Hauptschicht, vorzugsweise mindestens 20° niedriger. Cycloolefincopolymere sind als Deckschicht besonders bevorzugt, jedoch müssen diese Deckschichten nicht die spezielle Mikrostruktur aufweisen.

Zur Eigenschaftsmodifizierung kann die Folie beschichtet sein.

Die erfindungsgemäße Folie kann zur Eigenschaftsverbesserung andere kompatible oder nicht kompatible Polymere enthalten. Diese Polymere können separate Schichten bilden oder mit dem Cycloolefincopolymeren vermischt sein. Beispiele für solche Polymere sind: Polyethylen, Polypropylen, Polymethylbuten-1, Poly(4-methylpenten-1), Polybuten-1 und Polystyrol, Polyvinylchlorid, Polyvinylidenchlorid, Polyvinylfuorid, Polytetrafluoroethylen, Polychloropren, Polyacrylat, Polymethacrylat, Polyacrylamid, Polyacrylnitril, Acrylnitril/Butadien/Styrol-Copolymere, Acrylnitril/Styrol-Copolymere und Acrylnitril/Styrol/Acrylat-Copolymere, Polyvinylalkohol, Polyvinylacetat, Polyvinylstearat, Polyvinylbenzoat, Polyvinylmaleat, Polyvinylbutyral, Polyallylphthalat, Polyallylmelamin, Copolymere aus den o.g. Monomeren wie Ethylen/Vinylacetat-Copolymer, Polyethylenoxid und Polymere aus Bis-Glycidylether, Polyoxymethylen, Polyoxyethylen und Polyoxymethylen/Ethylenoxid-Copolymere, Polyphenyloxidpolymere, Polycarbonate, Polysulfone, Polyurethane, Nylon 6, Nylon 66, Nylon 11 und Nylon 12, Polyethylenterephthalat, Polybutylenterephthalat und Poly-1,4-dimethylolcyclohexanterephthalat, Polyethylennaphthalat (PEN), Polyethylennaphthalatbibenzoat (PENBB), Phenolformaldehydharze und Melaminformaldehydharze, Cellulose, Cellulosepropionate und Celluloseether sowie Proteine.

Die Folien können durch verschiedene Verfahren hergestellt werden. Gießen aus Lösung ist möglich, aber die thermoplastische Verarbeitung ist in der Regel vorteilhafter. Plattenpressen eignet sich gut für Versuche, jedoch sind kontinuierliche Verfahren wie Extrusion oder Kalandrieren für die industrielle Herstellung wirtschaftlicher.

Extrudierte Folien können als Schlauch oder Flachfolie geformt werden. Zur Herstellung von mehrschichtigen Folien empfiehlt sich die Coextrusion.

Häufig werden die Folien zur weiteren Verbesserung der mechanischen Eigenschaften orientiert. Dies erfolgt durch Streckung. Die Strecktemperaturen sollten zweckmäßigerweise in einem Temperaturintervall von 40 C unter der Glastemperatur (T_{g}-40°C) bis 50°C oberhalb der Glastemperatur (T_{g} + 50°C) liegen. Die Orientierung kann uniaxial oder biaxial erfolgen.

Für die industrielle Fertigung eignen sich Strecktemperaturen oberhalb T_{g}, weil dies wegen der höheren erzielbaren Streckgeschwindigkeiten eine schnellere Fertigung erlaubt. Temperatur, Streckrate und Streckverhältnisse müssen so aufeinander abgestimmt sein, daß die Folie nicht reißt. Die Streckgeschwindigkeit beträgt bevorzugt 1 - 500000 %/Min.. Die Streckverhältnisse in Längs- und Querrichtung betragen jeweils 1,1:1 - 10:1, vorzugsweise 1,5:1 - 4:1. Das Flächenstreckverhältnis sollte vorzugsweise 3-20 betragen.

Bei der Ausführung der Streckung oberhalb T_{g} ist eine rasche Abkühlung der Folie unter T_{g} nach erfolgter Streckung zweckmäßig. Ansonsten besteht die Gefahr, daß die Orientierung durch Relaxation verlorengeht. Diese Verfahrensmaßnahme ist kritischer bei den amorphen Polymeren als bei den biegsamen Polymeren.

Bei biaxialer Orientierung kann die Streckung simultan oder sequentiell durchgeführt werden. Bei Flachfolien sind Tenterverfahren geeignet, aber auch Simultanstreckrahmen. Schlauchfolien werden durch Aufblasen bei gleichzeitigem Längsabzug biaxial orientiert.

Orientierte amorphe Folien können als Schrumpffolien eingesetzt werden.

Nicht oder nur geringfügig orientierte Folien können zur Herstellung von Tiefziehteilen verwendet werden.

Die Oberflächen der Folien können zur Erzielung von z.B. Haftvermittlung oder Bedruckbarkeit oder Antistatik oder Antihaft-Eigenschaften modifiziert werden. Diese Modifizierung kann entweder durch Behandlungsmethoden wie Corona-, Flamm-, Plasma- oder Oxidationsbehandlung erfolgen oder auch durch die Aufbringung einer Beschichtung aus Lösung oder Dispersion.

Im Folgenden ist die Erfindung anhand von Beispielen näher erläutert.

### Beispiele

In den nachfolgenden Beispielen werden folgenden Untersuchungsmethoden verwendet.

Die Glastemperatur (T_{g}) wurde als sprunghafter Anstieg der Wärmekapazität im DSC-Diagramm bestimmt. Die DSC-Diagramme wurden mit einem Perkin-Elmer DSC 7 aufgenommen.

Die Viskositätszahl (VZ) wurde entsprechend DIN 53 728 in Dekalin bei 135°C bestimmt.

Die Biegewechselzahl wurde mit einem Wechselbiegeprüfgerät der Fa. Frank GmbH an 170 mm x 15 mm große Proben bei 500 Wechselbiegungen/min und einer Belastung von 150 g bestimmt. Die angegebenen Werten sind der Mittelwert von 5 Messungen.

Die mechanischen Eigenschaften der Folien wurden mit einer Zugprüfmaschine 1445 der Fa. Zwick an 15 mm breiten Proben bei einer Einspannlänge von 100 mm untersucht. Der Zug-E-Modul wurde im Dehnungsbereich von 0,3 bis 0,5% bei einer Dehngeschwindigkeit von 10 mm/min bestimmt. Die Reißfestiokeit und -dehnung wurden bei 100 mm/min bestimmt.

### Beispiel 1

### Herstellung eines Polymeren mit der erfindungswesentlichen speziellen Mikrostruktur:

Ein sauberer und trockener 75 dm³-Polymerisationsreaktor mit Rührer wurde mit Stickstoff und dann mit Ethylen gespült und mit 25 000 g Norbornen-Schmelze bei 70° C gefüllt. Unter Rühren wurde dann der Reaktor auf einer Temperatur von 70° C gehalten und 15 bar Ethylen (Überdruck) aufgedrückt.

Danach wurden 580 cm³ toluolische Methylaluminoxan-Lösung (MAO-Lsg., 10,1 Gew.-% Methylaluminoxan mit einer Molmasse von 1300 g/mol nach kryoskopischer Bestimmung) in den Reaktor dosiert und die Mischung 15 Minuten bei 70° C gerührt, wobei durch Nachdosieren der Ethylendruck bei 15 bar gehalten wurde. Parallel dazu wurden 3000 mg *rac*-Dimethylsilyl-bis-(1-indenyl)-zirkondichlorid (Metallocen-Katalysator) in 1000 ml MAO-Lösung (Konzentration und Qualität wie oben) gelöst und durch 15 minütiges Stehenlassen voraktiviert. Unter Rühren (750 UPM) wurde dann 220 Minuten bei 70° C polymerisiert, wobei der Ethylendruck durch Nachdosieren bei 15 bar gehalten wurde. Dann wurde der Reaktorinhalt schnell in ein Rührgefäß abgelassen, in dem 200 cm³ Isopropanol vorgelegt waren. Die Mischung wurde in 500 dm³ Aceton dispergiert, 10 Minuten gerührt und dann der suspendierte polymere Feststoff abfiltriert.

Das abfiltrierte Polymere wurde dann in 200 dm³ einer Mischung aus 2 Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80° C und 0,2 bar 15 Stunden getrocknet. Es wurde eine Produktmenge von 5100 g erhalten. An dem Produkt wurde eine Viskositätzahl (VZ) von 90 cm³/g und eine Glastemperatur (T_{g}) von 147° C gemessen.

Ein ¹³C-NMR-Spektrum einer Lösung des Polymeren in Hexachlorbutadien und Tetrachlorethan-D2 wurde mit einem 400 MHz-NMR-Gerät (Bruker AM 400) aufgenommen. Wie aus der Abbildung 4 ersichtlich, weist das Spektrum die charakteristischen Peaks bei 28,0, 31,5, 33,1, 41,3, 42,2, 47,7 und 48,8 ppm auf.

### Beispiele 2 und 3

### Herstellung weiterer Polymere mit der erfindungswesentlichen speziellen Mikrostruktur:

Analog zu Beispiel 1 wurden Polymere hergestellt, wobei in Beispiel 2 Isopropylen-(cyclopentadienyl)-(1-indenyl)-zirkondichlorid anstelle von *rac*-Dimethylsilyl-bis-(1-indenyl)-zirkondichlorid als Metallocen-Katalysator verwendet wurde. *rac*-Dimethylsilyl-bis-(1-indenyl)-zirkondichlorid wurde in Beispiel 3 und Bis(1-indenyl)-zirkondichlorid in Beispiel 4 verwendet.

Tabelle 1 faßt die geänderten Reaktionsbedingungen zusammen.

Die für die Mikrostruktur charakteristischen Peaks im ¹³C-NMR-Spektrum bei 28,0, 31,5, 33,1, 41,3, 42,2, 47,7 und 48,8 ppm sind auch hier vorhanden.

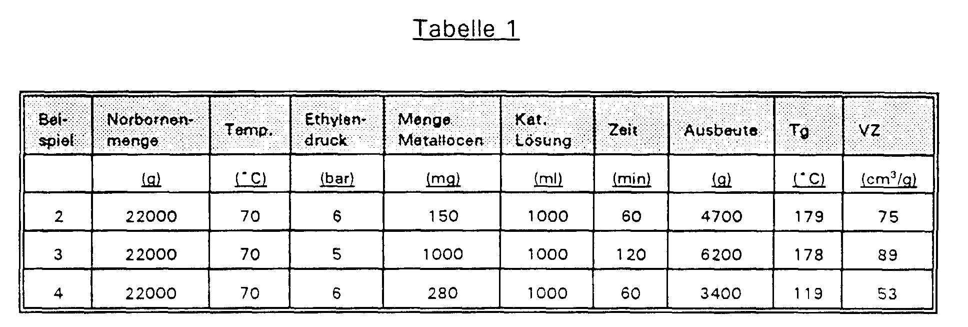

### Beispiel 5 und 6 (Vergleichsbeispiele)

### Herstellung eines Polymeren ohne die erfindungswesentliche spezielle Mikrostruktur:

Analog zum Beispiel 1 wurden Polymere ohne die spezielle Mikrostruktur hergestellt. Anstelle von *rac*-Dimethylsilyl-bis-(1-indenyl)-zirkondichlorid wurden Diphenylmethylen-(cyclopentadienyl)-(9-fluorenyl)-zirkondichlorid (Beispiel 5) und Isopropylen-(cyclopentadienyl)-(9-fluorenyl)-zirkondichlorid (Beispiel 6) als Metallocen-Katalysatoren verwendet.
Tabelle 2 faßt die Reaktionsbedingungen zusammen. Das ¹³C-NMR-Spektrum des Polymers gemäß Beispiel 5 ist in Abb. 5 widergegeben. Die für die spezielle Mikrostruktur charakteristischen Peaks bei 28,0, 31,5, 33,1, 41,3, 42,2, 47,7 und 48,8 ppm fehlen.

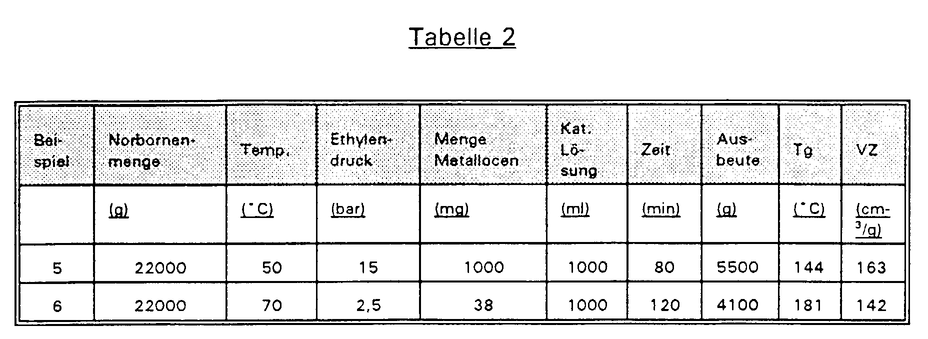

### Beispiel 7

Die Polymeren aus den Beispielen 1 bis 5 wurden in einer Plattenpresse bei 250 °C zu 1 mm dicken Platten gepreßt. Daraus wurden 50 mm x 10 mm große Proben geschnitten. Die Temperaturabhängigkeit des mechanischen tan δ wurde mit einem Torsionspendelgerät (Fa. Zwick) bestimmt (vgl. Abb. 1, 2 und 3). Die Ergebnisse sind in Tabelle 3 zusammengefaßt.

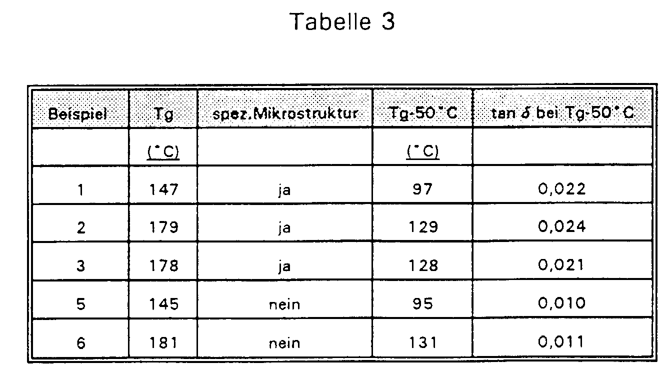

### Beispiel 8

### Herstellung einer nicht orientierten Folie mit der erfindungswesentlichen speziellen Mikrostruktur:

Das Polymer aus Beispiel 1 wurde in einer Plattenpresse bei 250° C zu einer 350 µm dicken Folie gepreßt. Die Folie war transparent und farblos und brach beim einmaligen Knicken. Die mechanischen Eigenschaften der Folie waren:

| | |
|---|---|
| E-Modul | 2,6 GPa |
| Reißfestigkeit | 50 MPa |
| Reißdehnung | 3 % |

### Beispiel 9 (Vergleichsbeispiel)

### Herstellung einer nicht orientierten Folie ohne erfindungswesentliche spezielle Mikrostruktur:

Das Polymer aus Beispiel 5 wurde in einer Plattenpresse bei 250° C zu einer 320 µm dicken Folie gepreßt. Die Folie war transparent und farblos und brach beim einmaligen Knicken. Die mechanischen Eigenschaften der Folie waren:

| | |
|---|---|
| E-Modul | 2,6 GPa |
| Reißfestigkeit | 30 MPa |
| Reißdehnung | 2 % |

### Beispiel 10

### Herstellung einer orientierten Folie mit der erfindungswesentlichen speziellen Mikrostruktur:

Die nicht orientierte Folie aus Beispiel 8 wurde an einer Folienstreckapparatur (Karo III der Fa. Brückner, Siegsdorf) bei 180° C längs und quer jeweils um einen Faktor 1,8 gestreckt.

Die mechanischen Eigenschaften der Folie waren:

| | |
|---|---|
| E-Modul | 3,2 GPa |
| Reißfestigkeit | 60 MPa |
| Reißdehnung | 2 % |
| Biegewechselzahl | 206 |

### Beispiel 11

### Herstellung einer höher orientierten Folie mit der erfindungswesentlichen speziellen Mikrostruktur:

Die nicht orientierte Folie aus Beispiel 8 wurde in der in Beispiel 10 beschriebenen Folienstreckapparatur zunächst bei 180°C bei einer Reckgeschwindigkeit von ca. 100%/min. längs und quer jeweils um ein Faktor 1,1 gestreckt. Dann wurde sie bei 125 °C bei einer Reckgeschwindigkeit von 25%/min längs und quer jeweils um den Faktor 2,0 weitergestreckt. Die mechanischen Eigenschaften der Folie waren:

| | |
|---|---|
| E-Modul | 3,2 GPa |
| Reißfestigkeit | 89 MPa |
| Reißdehnung | 26 % |
| Biegewechselzahl | 4000 |

### Beispiele 12 und 13 (Vergleichsbeispiel)

### Herstellung von orientierten Folien ohne erfindungswesentliche spezielle Mikrostruktur:

Die nicht orientierte Folie aus Beispiel 9 wurde analog zu Beispiel 10 jeweils in Längs und Querrichtung um verschiedene Streckfaktoren gestreckt (Beispiele 12 und 13). Die mechanischen Eigenschaften waren:

| | **Beispiel 12** | **Beispiel 13** |
|---|---|---|
| Streckfaktor (längs u. quer; je) | 1,8 | 2,3 |
| E-Modul | 3,6 | 3,6 GPa |
| Reißfestigkeit | 37 | 47 MPa |
| Reißdehnung | 2 | 2 % |
| Biegewechselzahl | 50 | 800 |

### Beispiel 14

### Herstellung eines Tiefziehteils

Die Folie aus Beispiel 7 wurde in einer Vakuumtiefziehmaschine auf ca. 180° C erwärmt und dann zu einem konischen standfesten Becher in einer kalten Tiefziehform geformt.

### Beispiel 15 (Vergleichsbeispiel)

Die Folie aus Beispiel 9 wurde analog zu Beispiel 14 tiefgezogen. Beim Aufstellen des Bechers riß dieser an Knickstellen ein.

## Patentansprüche

1. Ein- oder mehrschichtige mono- oder biaxial orientierte Folie bei der mindestens eine Schicht ein Cycloolefincopolymer enthält, dadurch gekennzeichnet, daß das Cycloolefincopolymer einen mechanischen Verlustfaktor (tan δ) von ≥0,015 bei 50 °C unterhalb der Glastemperatur besitzt.

2. Folie nach Anspruch 1 dadurch gekennzeichnet, daß das ¹³C-NMR-Spektrum des Cycloolefincopolymeren einen Peak bei 42,2 ppm aufweist.

3. Folie nach Anspruch 1 oder 2, dadurch gekennzeichnet, daß das ¹³C-NMR-Spektrum des Cycloolefincopolymeren Peaks bei 28,0, 31,5, 33,1, 41,3, 47,7 und 48,8 ppm aufweist.

4. Folie nach einem oder mehreren der Ansprüche 1 bis 3, dadurch gekennzeichnet, daß sie einschichtig ist.

5. Folie nach einem oder mehreren der Ansprüche 1 bis 4, dadurch gekennzeichnet, daß sie biaxial orientiert ist.

6. Folie nach einem oder mehreren der Ansprüche 1 bis 5, dadurch gekennzeichnet, daß das Cycloolefincopolymer aus Wiederholungseinheiten der Formel (I) und (II) und gegebenenfalls (III) und/oder (IV) und/oder (V) 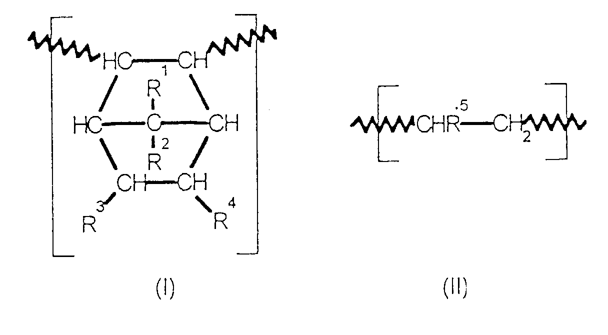 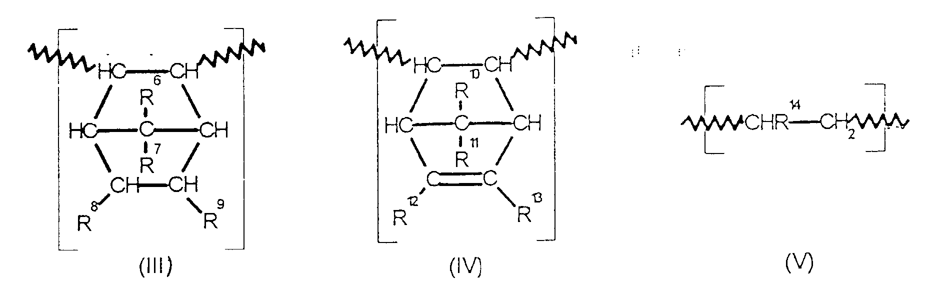 besteht,
wobei (III) ungleich (I) ist,
R¹ bis R⁵ gleich oder verschieden sind und H, C₆-C₁₆-Aryl, C₁ - C₁₀-Alkyl, C₂ - C₁₀- Alkenyl, C₃ - C₁₀-Cycloalkyl oder C₃- C₁₀-Cycloalkenyl bedeuten und wobei
R⁶ bis R¹⁴ gleich oder verschieden sind und die Bedeutung von R¹ bis R⁵ haben oder wobei die Restepaare R⁶/R⁷, R⁸/R⁹, R¹⁰/R¹¹ und/oder R¹²/R¹³ jeweils untereinander verbunden sind und zusammen mit den C-Atomen an denen sie gebunden sind einen C₄- C₁₀-Cycloalkyl- oder C₄ - C₁₀-Cycloalkenylrest darstellen, der seinerseits durch einen -C(R¹,R²)-Rest überbrückt sein kann, wobei R¹ und R² die oben für R¹ bis R⁵ angegebenen Bedeutungen haben.

7. Folie nach Anspruch 6, dadurch gekennzeichnet, daß R¹, R²,R³, R⁴ und R⁵ Wasserstoff bedeuten.

8. Folie nach einem oder mehreren der Ansprüchen 1 bis 6, dadurch gekennzeichnet, daß das Cycloolefincopolymer unter Verwendung eines verbrückten Metallocen-Katalysatorsystems hergestellt wurde.

9. Folie nach einem oder mehreren der Ansprüchen 1 bis 8, dadurch gekennzeichnet, daß die Glastemperatur des Cycloolefincopolymeren zwischen 50 und 250 °C, vorzugsweise zwischen 80 und 200 °C liegt.

10. Folie nach einem oder mehreren der Ansprüchen 1 bis 9, dadurch gekennzeichnet, daß sie, bezogen auf das Gewicht der Folie, 0 bis 2 Gew.-% inerte Partikel enthält.

## Claims

1. A single- or multilayer mono- or biaxially oriented film in which at least one layer comprises a cycloolefin copolymer, wherein the cycloolefin copolymer has a mechanical loss factor (tan δ) of ≥ 0.015 at 50°C below the glass transition temperature.

2. A film as claimed in claim 1, wherein the ¹³C-NMR spectrum of the cycloolefin copolymer has a peak at 42.2 ppm.

3. A film as claimed in claim 1 or 2, wherein the ¹³C-NMR spectrum of the cycloolefin copolymer has peaks at 28.0, 31.5, 33.1, 41.3, 47.7 and 48.8 ppm.

4. A film as claimed in one or more of claims 1 to 3, which is a single-layer film.

5. A film as claimed in one or more of claims 1 to 4, which is biaxially oriented.

6. A film as claimed in one or more of claims 1 to 5, wherein the cycloolefin copolymer comprises repeating units of the formula (I) and (II) and if appropriate (III) and/or (IV) and/or (V) 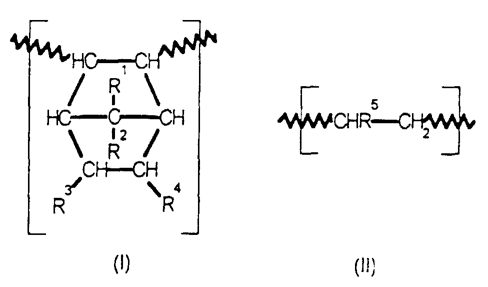 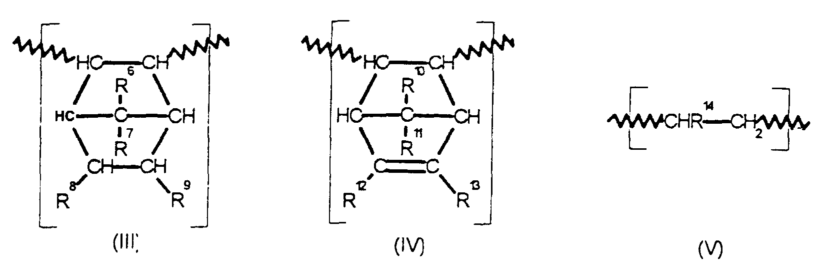 in which (III) is not identical to (I),
R¹ to R⁵ are identical or different and are H, C₆-C₁₆-aryl, C₁-C₁₀-alkyl, C₂-C₁₀-alkenyl, C₃-C₁₀-cycloalkyl or C₃-C₁₀-cycloalkenyl and in which
R⁶ to R¹⁴ are identical or different and have the meaning of R¹ to R⁵, or in which the radical pairs R⁶/R⁷, R⁸/R⁹, R¹⁰/R¹¹ and/or R¹²/R¹³ in each case are bonded to one another and, together with the carbon atoms to which they are bonded, are a C₄-C₁₀-cycloalkyl or C₄-C₁₀-cycloalkenyl radical, which in turn can be bridged by a -C(R¹,R²)- radical, in which R¹ and R² have the meanings given above for R¹ to R⁵.

7. A film as claimed in claim 6, wherein R¹, R², R³, R⁴ and R⁵ are hydrogen.

8. A film as claimed in one or more of claims 1 to 6, wherein the cycloolefin copolymer has been prepared using a bridged metallocene catalyst system.

9. A film as claimed in one or more of claims 1 to 8, wherein the glass transition temperature of the cycloolefin copolymer is between 50 and 250°C, preferably between 80 and 200°C.

10. A film as claimed in one or more of claims 1 to 9, which comprises 0 to 2% by weight of inert particles, based on the weight of the film.

## Revendications

1. Feuille à une ou plusieurs couches orientée de manière monoaxiale ou biaxiale, dans laquellle au moins une couche contient un copolymère de cyclooléfine, caractérisée en ce que le copolymère de cyclooléfine possède un facteur de perte mécanique (tan δ) de ≥ 0,015 à 50°C au-dessous de la température de transition vitreuse.

2. Feuille suivant la revendication 1 caractérisée en ce que le spectre ¹³C-RMN du copolymère de cyclooléfine présente un pic à 42,2 ppm.

3. Feuille suivant la revendication 1 ou 2, caractérisée en ce que le spectre ¹³C-RMN du copolymère de cyclooléfine présente des pics à 28,0, 31,5, 33,1, 41,3, 47,7 et 48,8 ppm.

4. Feuille suivant l'une ou plusieurs des revendications 1 à 3, caractérisée en ce qu'elle est monocouche.

5. Feuille suivant l'une ou plusieurs des revendications 1 à 4, caractérisée en ce qu'elle est orientée de manière biaxiale.

6. Feuille suivant l'une ou plusieurs des revendications 1 à 5, caractérisée en ce que le copolymère de cyclooléfine est constitué d'unités répétitives de la formule (I) et (II) et, le cas échéant, (III) et/ou (IV) et/ou (V) 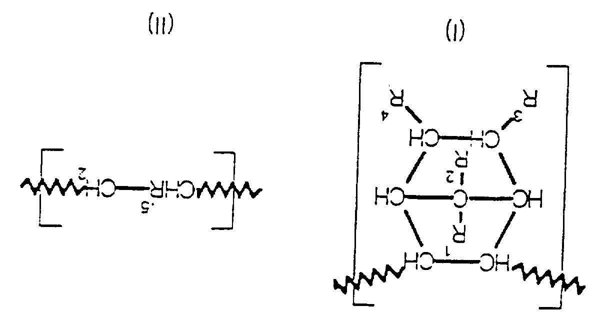 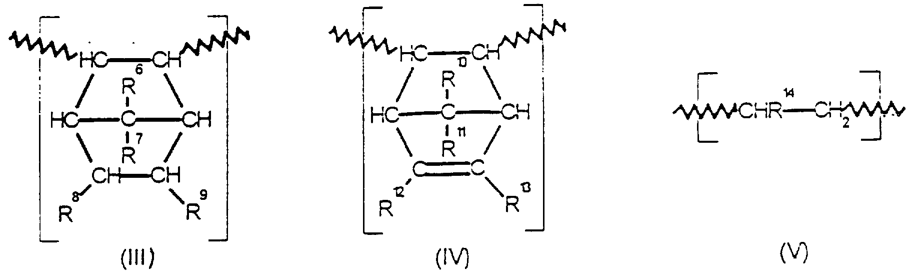 (III) étant différent de (I), R¹ à R⁵ étant identiques ou différents et signifiant H, aryle en C₆-C₁₆, alkyle en C₁-C₁₀, alcényle en C₂-C₁₀, cycloalkyle en C₃-C₁₀ ou cycloalcényle en C₃-C₁₀, et R⁶ à R¹⁴ étant identiques ou différents et ayant la signification de R¹ à R⁵ ou les paires de radicaux R⁶/R⁷, R⁸/R⁹, R¹⁰/R¹¹ et/ou R¹²/R¹³ étant chaque fois liées les unes aux autres et représentant, conjointement avec les atomes de carbone auxquels elles sont liées, un radical cycloalkyle en C₄-C₁₀ ou un radical cycloalcényle en C₄-C₁₀, qui de son côté peut être ponté par un radical C(R¹, R²), dans lequel R¹ et R² ont les significations données plus haut pour R¹ à R⁵.

7. Feuille suivant la revendication 6, caractérisée en ce que R¹, R², R³, R⁴ et R⁵ signifient un hydrogène.

8. Feuille suivant l'une ou plusieurs des revendications 1 à 6, caractérisée en ce que le copolymère de cyclooléfine est préparé en utilisant un système de catalyseur à métallocène ponté.

9. Feuille suivant l'une ou plusieurs des revendications 1 à 8, caractérisée en ce que la température de transition vitreuse du copolymère de cyclooléfine se situe entre 50 et 250°C, de préférence entre 80 et 200°C.

10. Feuille suivant l'une ou plusieurs des revendications 1 à 9, caractérisée en ce qu'elle contient 0 à 2% en poids de particules inertes sur base du poids de la feuille.
